(19) **Europäisches Patentamt**

**European Patent Office**

**Office européen des brevets**

(11) **EP 0 912 642 B1**

(12) **EUROPÄISCHE PATENTSCHRIFT**

(45) Veröffentlichungstag und Bekanntmachung des Hinweises auf die Patenterteilung:
**21.04.2004 Patentblatt 2004/17**

(51) Int Cl.⁷: **C09C 1/00**, C09D 7/12, C08K 3/00, A61K 7/00

(21) Anmeldenummer: **98913561.1**

(22) Anmeldetag: **18.02.1998**

(86) Internationale Anmeldenummer:
**PCT/EP1998/000931**

(87) Internationale Veröffentlichungsnummer:
**WO 1998/038255 (03.09.1998 Gazette 1998/35)**

(54) **MULTISCHICHT-INTERFERENZPIGMENT MIT ABSORBIERENDER MITTELSCHICHT**

MULTILAYER INTERFERENCE PIGMENT WITH ABSORBENT CENTRAL LAYER

PIGMENT D'INTERFERENCE A COUCHES MULTIPLES COMPORTANT UNE COUCHE CENTRALE ABSORBANTE

(84) Benannte Vertragsstaaten:
**DE ES FI FR GB IT**

(30) Priorität: **27.02.1997 DE 19707805**

(43) Veröffentlichungstag der Anmeldung:
**06.05.1999 Patentblatt 1999/18**

(73) Patentinhaber: **MERCK PATENT GmbH**
**64271 Darmstadt (DE)**

(72) Erfinder:
• **KUNTZ, Matthias**
  **D-64342 Seeheim (DE)**
• **PFAFF, Gerhard**
  **D-64839 Münster (DE)**
• **BAUER, Gerd**
  **D-63801 Klein-Ostheim (DE)**
• **SCHANK, Christina**
  **D-64367 Mühltal (DE)**

(56) Entgegenhaltungen:
EP-A- 0 381 047       EP-A- 0 668 329
WO-A-93/08237        US-A- 4 434 010

**Beschreibung**

Die Erfindung betrifft mehrschichtige Interferenzpigmente, bestehend aus alternierenden Schichten eines Materials mit niedriger Brechzahl und eines Metalls oder eines Materials mit hoher Brechzahl, wobei die zentrale Schicht aus einem absorbierenden Material gebildet wird.

Mehrschichtige Pigmente mit alternierenden Schichten aus einem Material mit hoher Brechzahl und einem Material mit niedriger Brechzahl sind bekannt. Es handelt sich hierbei vorwiegend um Metalloxide. Das Material mit hoher Brechzahl kann aber auch durch eine semitransparente Metallschicht ersetzt sein. Die Metalloxidschichten werden entweder im Naßverfahren durch Auffällen der Metalloxidhydrate aus einer Metallsalzlösung auf ein Trägermaterial oder durch Aufdampfen oder Sputtern im Vakuum hergestellt. So beschreibt US 4 434 010 ein mehrschichtiges Interferenzpigment, bestehend aus einer zentralen Schicht eines reflektierenden Materials (Aluminium) und alternierenden Schichten zweier transparenter, dielektrischer Materialien mit hoher und niedriger Brechzahl, beispielsweise Titandioxid und Siliziumdioxid beiderseits der zentralen Aluminiumschicht. In einer weiteren Ausführungsform des Pigmentes werden die auf die zentrale Aluminiumschicht folgenden Schichten durch Magnesiumfluorid und Chrom gebildet. Dieses Pigment wird für den Druck von Wertpapieren eingesetzt.

JP H7-759 (A) beschreibt ein mehrschichtiges Interferenzpigment mit metallischem Glanz. Es besteht aus einem Substrat, das mit alternierenden Schichten von Titandioxid und Siliziumdioxid beschichtet ist. Das Substrat wird aus Aluminium-, Gold- oder Silberplättchen oder Plättchen aus Glimmer und Glas, die mit Metallen beschichtet sind, gebildet.

Alle Pigmenttypen, die als zentrale Schicht eine Metallschicht aufweisen, haben den Nachteil, daß an dieser Reflexionsschicht alle Wellenlängen zurückgeworfen werden mit dem Effekt, daß zwar ein hoher Glanz erzielt wird, aber gleichzeitig die eigentliche Interferenzfarbe überstrahlt wird.

In der WO 93/08237 werden plättchenförmige Pigmente beschrieben, welche aus einer transparenten, anorganischen, plättchenförmigen Matrix bestehen, die ein lösliches oder nicht lösliches Farbmittel enthalten kann und wobei die Matrix zumindest auf einer Seite mit einer oder mehreren Schichten aus Metalloxiden oder Metallen belegt ist.

Aus der EP 0 381 047 sind Glanzpigmente bekannt, welche aus einem Träger aus einem farbigen, organischen plättchenförmigen Farbpigment mit darauf aufgebrachten filmartigen Umhüllungen aus Metalloxiden bestehen.

Aufgabe der Erfindung ist es, ein Interferenzpigment mit kräftigen Interferenzfarben, einer starken Winkelabhängigkeit der Interferenzfarben und einem hohen Deckvermögen zur Verfügung zu stellen.

Diese Aufgabe wird gemäß der Erfindung gelöst durch ein mehrschichtiges Interferenzpigment bestehend aus einer zentralen Schicht aus einem Lacksystem, welches Ruß, farbgebende Absorptionspigmente oder Mischungen daraus enthält, und alternierenden Schichten eines Materials mit niedriger Brechzahl und eines Metalls oder eines Materials mit hoher Brechzahl beiderseits der zentralen Schicht.

Weiterhin wird diese Aufgabe gemäß der Erfindung gelöst durch ein Verfahren zur Herstellung des erfindungsgemäßen Pigmentes durch

- Aufbringen einer Ablöseschicht aus einem in Wasser oder Lösemitteln löslichen Material auf einen Träger,

- Abscheiden eines Schichtsystems aus abwechselnden Schichten eines Materials mit niedriger Brechzahl und eines Metalls oder eines Materials mit hoher Brechzahl auf die Ablöseschicht, wobei als zentrale Schicht eine Schicht aus einem Lacksystem, welches Ruß, farbgebende Absorptionspigmente oder Mischungen daraus enthält, aufgebracht wird,

- Entfernen des gebildeten Schichtsystems vom Träger durch Auflösen der Ablöseschicht, Waschen und Trocknen des erhaltenen plättchenförmigen Interferenzpigmentes,

- Wärmebehandlung des Pigments im Stickstoffstrom bei 100 bis 300°C und

- Mahlen und Klassieren des Pigmentes.

Gegenstand der Erfindung ist außerdem die Verwendung der erfindungsgemäßen Pigmente zur Pigmentierung von Lacken, Druckfarben, Kunststoffen, Kosmetika und zur Herstellung von Folien.

Das Material mit hoher Brechzahl ist ein Metalloxid oder Mischungen von Metalloxiden mit oder ohne absorbierende Eigenschaften, wie z.B. $TiO_2$, $ZrO_2$, $Fe_2O_3$, $Fe_3O_4$, $Cr_2O_3$ oder ZnO, oder eine Verbindung mit hoher Brechzahl, wie z.B. Eisentitanate, Eisenoxidhydrate oder Titansuboxide oder Mischungen bzw. Mischphasen dieser Verbindungen untereinander oder mit anderen Metalloxiden.

Das Metall ist vorzugsweise Aluminium, Chrom, Nickel, eine Chrom-Nickel-Legierung oder Silber, Chrom und Aluminium sind dabei bevorzugt, da sie leicht abzuscheiden sind. Außerdem weisen hier die Schichten eine gut zu kontrollierende Reflektivität und eine hohe Korrosionsbeständigkeit auf. Metallschichten werden gegenüber Schichten aus einem Material mit hoher Brechzahl bevorzugt.

Das Material mit niedriger Brechzahl ist $MgF_2$ oder ein Metalloxid wie $SiO_2$, $Al_2O_3$ oder eine Mischung daraus und kann ebenfalls absorbierende oder nicht absorbierende Eigenschaften haben. Gegebenenfalls kann das Material mit niedriger Brechzahl Alkali- und Erdalkalioxide als Bestandteile enthalten.

Bevorzugt werden als Material mit niedriger Brechzahl jedoch Polymere, wie z.B. Acrylate, eingesetzt. Die verwendeten Monomere haben ein Molekulargewicht von 200 bis 1000 und stehen als Mono-, Di- oder Triacrylate zur Verfügung. Hinsichtlich funktioneller Gruppen sind sie als Kohlenwasserstoffe, Polyole, Polyether, Silicone oder als fluorierte teflonartige Monomere verfügbar. Diese Monomere können durch Elektronenstrahlen oder UV-Strahlen polymerisiert werden. Die erhaltenen Schichten besitzen eine Temperaturstabilität bis zu 250 °C. Die Brechzahlen der Acrylatschichten liegen im Bereich von 1,35 bis 1.60. Weitere Angaben sind bei David G. Shaw und Marc G. Langlois zu finden: Use of a new high speed acrylate deposition process to make novel multilayer structures, MRS-Tagung in San Francisco 1995; A new high speed process for vapor depositing fluoro and silicone acrylates for release coating applications, Tagung der Society of Vacuum Coater in Chicago, Illinois, 1995.

Die absorbierende Mittelschicht besteht aus einem konventionellen Lacksystem, das Ruß oder farbgebende Absorptionspigmente oder Mischungen daraus enthält. Ein bevorzugt verwendetes Lacksystem, das auch auf Metallschichten gut haftet, ist ein Acrylat-Melamin-Harz.

Die Dicke der Absorptionsschicht liegt zwischen 50 nm und 2 μm.

Die Differenz der Brechzahlen zwischen einer Schicht mit hoher Brechzahl und einer Schicht mit niedriger Brechzahl sollte mindestens 0,1 betragen.

Die Schichtdicke der Schichten mit niedriger Brechzahl wird auf Werte zwischen 20 nm und 700 nm, bevorzugt zwischen 60 nm und 500 nm eingestellt. Die Schichtdicke der Metallschichten wird auf 5 bis 20 nm eingestellt, um Semitransparenz zu erhalten.

Die mit einem Vielfachschichtsystem maximal erreichbare Reflexion hängt von der Schichtzahl und den Brechzahlen der Schichten ab:

$$R = \left[ \frac{1-(n_H/n_L)^{2p}\, n_H^2}{1+(n_H/n_L)^{2p}\, n_H^2} \right]^2$$

Dabei ist $n_H$ die Brechzahl der hochbrechenden Schicht, $n_L$ die Brechzahl der niedrigbrechenden Schicht und P ist die Schichtzahl. Diese Gleichung gilt für eine Schichtzahl von 2p + 1.

Die Schichtdicke für maximale Reflexion ist jeweils d = λ/4n oder ein Vielfaches davon mit der Lichtwellenlänge λ. Die Dicke und Anzahl der Schichten richtet sich nach dem gewünschten Effekt hinsichtlich Interferenzfarbe und Winkelabhängigkeit der Interferenzfarbe. λ bewegt sich im Bereich zwischen 400 nm (violettes Licht) bis etwa 750 nm (roter Bereich). Um entsprechende Farben zu bekommen, muß die Schichtdicke, abhängig von der Brechzahl des optisch dünneren Mediums eingestellt werden. Darüber hinaus kann man die erfindungsgemäßen Pigmente auch dazu einsetzen, in den angrenzenden Wellenbereichen - (UV - Infrarot) - entsprechende selektiv reflektierende Pigmente herzustellen.

In der Feinoptik, z.B. bei der Herstellung von Spiegelschichten, Strahlteilern oder Filtern wird mit Schichtzahlen bis zu 100 oder mehr gearbeitet. Für die Herstellung von Pigmenten sind derartig hohe Schichtzahlen nicht notwendig. Die Anzahl der Schichten liegt normalerweise unter 10.

Die einzelnen Schichten werden nach bekannten Verfahren durch Sputtern von Metallen, beispielsweise von Aluminium oder Chrom oder von Legierungen, wie zum Beispiel Cr-Ni-Legierungen sowie von Metalloxiden, beispielsweise von Titanoxid, Siliciumoxid oder Indium-Zinn-Oxid oder durch thermisches Verdampfen von Metallen, Metalloxiden oder Acrylaten hergestellt.

Bevorzugt wird für die Herstellung der erfindungsgemäßen Pigmente eine Vakuumbandbeschichtung, wie sie in US 5 440 446 für die Herstellung von Hochspannungskondensatoren und in EP 0 733 919 für die Herstellung von Interferenzfarbfiltern beschrieben wird.

Als Träger für das Interferenzschichtsystem wird ein flexibles Band aus Polyethylenterephthalat (PET), anderen Polyestern, Polyacrylaten, Polyethylen (PE) oder Polypropylen (PP) verwendet.

Die Ablöseschicht, die auf den Träger aufgebracht wird, um das Interferenzschichtsystem nach erfolgter Abscheidung vom flexiblen Band ablösen zu können, besteht aus einem in Wasser oder Lösemitteln löslichen Material, wie z.B. Polyethylenglykol, Wachs oder Silikon. Als Lösungsmittel werden Wasser oder Aceton verwendet.

Im folgenden soll das Aufbringen der Interferenzschichten durch Aufdampfen näher beschrieben werden:

Bei den Aufdampfverfahren werden die zu verdampfenden Stoffe im Vakuum erhitzt und verdampft. Die Dämpfe kondensieren auf den kalten Substratflächen zu den gewünschten dünnen Schichten. Die Verdampfung geschieht entweder in Behältern aus Metall (Schiffchen aus Wolfram, Molybdän oder Tantalblech), die durch Stromdurchgang direkt beheizt werden, oder durch Beschuß mit Elektronenstrahlen.

Für die Herstellung des Interferenzschichtsystems kann eine herkömmliche Bandbedampfungsanlage eingesetzt werden. Die Aufdampfanlage besteht aus den üblichen Komponenten, wie Vakuumkessel, Vakuumpumpsystem, Druckmeß- und Steuereinheiten, Verdampfereinrichtungen, wie Widerstandsverdampfer (Schiffchen) oder Elektronenstrahlverdampfer, Schichtdickenmeß- und Kontrollsystem, Vorrichtung zur Einstellung bestimmter Druckverhältnisse sowie ein Gaseinlaß- und Regelsystem für Sauerstoff.

Die Hochvakuumaufdampftechnik ist ausführlich beschrieben in Vakuum-Beschichtung, Bände 1-5; Herausgeber Frey, Kienel u. Löbl, VDI-Verlag 1995.

Das Aufbringen der Schichten durch Sputter-Verfahren erfolgt auf folgende Weise:

Beim Sputterverfahren oder bei der Kathodenzerstäubung wird zwischen dem Träger und dem Beschichtungsmaterial, das in Form von Platten (Target) vorliegt, eine Gasentladung (Plasma) gezündet. Das Beschichtungsmaterial wird durch energiereiche Ionen aus dem Plasma, z.B. Argonionen, beschossen und dadurch abgetragen bzw. zerstäubt. Die Atome oder Moleküle des zerstäubten Beschichtungsmaterials werden auf dem Träger niedergeschlagen und bilden die gewünschte dünne Schicht.

Für Sputterverfahren eignen sich besonders Metalle oder Legierungen. Diese können mit vergleichsweise hohen Geschwindigkeiten, insbesondere im sogenannten DC-Magnetron-Verfahren, zerstäubt werden. Verbindungen wie Oxide oder Suboxide oder Mischungen aus Oxiden können durch Einsatz des Hochfrequenz-Sputtern ebenfalls zerstäubt werden. Die chemische Zusammensetzung der Schichten wird durch die Zusammensetzung des Beschichtungsmaterials (Target) bestimmt. Sie kann aber auch durch Zusätze zum Gas, das das Plasma bildet, beeinflußt werden. Insbesondere werden Oxid- oder Nitridschichten durch Zusatz von Sauerstoff oder Stickstoff im Gasraum hergestellt.

Die Struktur der Schichten kann durch geeignete Maßnahmen, wie Beschuß der aufwachsenden Schicht durch Ionen aus dem Plasma, beeinflußt werden.

Das Sputterverfahren ist ebenfalls beschrieben in Vakuum-Beschichtung, Bände 1-5; Herausgeber Frey, Kienel und Löbl, VDI-Verlag 1995.

Das Prinzip des Aufbringens Aufbringen von Metall- und Polymerschichten ist in US 5 440 446 und EP 0 733 919 beschrieben und erfolgt auf folgende Weise:

Die gesamte Beschichtungsanlage befindet sich innerhalb einer konventionellen Vakuumkammer 1. Auf einer Abspulrolle 2 ist ein Polyesterband 3 aufgewickelt, auf das bereits auf einer Seite eine Ablöseschicht aufgebracht ist. Das Polyesterband 3 wird über eine rotierende Trommel 4 geführt und auf die Aufnahmerolle 5 aufgewickelt. Rolle 6 und Rolle 7 dienen als Spann- und Führungsrollen.

Das Band passiert die Metallisierungsstation 8, wo eine semitransparente Metallschicht durch Vakuumverdampfung oder Sputtern abgeschieden wird. Anschließend passiert das Band den Schnellverdampfer 9. Im Verdampfer befindet sich ein gasförmiges Acrylatmonomer, das als dünne Schicht auf die auf dem Trägerband befindliche Metallschicht abgeschieden wird. Das Band durchläuft anschließend eine Bestrahlungsstation 10, wo es mit Elektronen oder ultraviolettem Licht bestrahlt wird. Durch die Bestrahlung wird die Polymerisation des Acrylatmonomers ausgelöst. Dann passiert das Band die zweite Metallisierungsstation 11. Danach wird auf das Band, das mit zwei semitransparenten Metallschichten und einer zwischen ihnen angeordneten Acrylatschicht beschichtet ist, nach Passieren von Spannrolle 7 aufgewickelt und außerhalb der Vakuumanlage die absorbierende Mittelschicht in einer konventionellen Bandbeschichtungsanlage aufgebracht.

Das Aufbringen der absorbierenden Mittelschicht erfolgt durch Auftragung eines konventionellen Lacksystems, das Ruß oder farbgebende Absorptionspigmente oder Mischungen daraus enthält, mittels Rasterwalze, durch Aufsprühen oder Aufrakeln. Auch andere Transfer- und Drucktechniken sind für diesen Prozeßschritt geeignet.

Durch Einstellen der Dicke der Mittelschicht und der Konzentration der Druckfarbe kann noch zwischen schwachtransparenten und vollständig absorbierenden Mittelschichten unterschieden werden.

Danach durchläuft das Band ein zweites Mal die Vakuumanlage, wo in gleicher Weise wie beim ersten Durchlauf die Metallschichten und die Acrylatschicht abgeschieden werden.

Für ein Schichtsystem aus 7 Schichten, bestehend aus einer zentralen Absorptionsschicht und zwei Metallschichten und einer Acrylatschicht beiderseits der zentralen Schicht, sind 2 Durchläufe durch die Vakuumbeschichtungsanlage erforderlich, wobei nach dem ersten Durchlauf die absorbierende Mittelschicht aufgetragen wird.

Nach der Beschichtung erfolgt das Ablösen der Mehrfachbeschichtung durch Auflösen der Ablöseschicht in einem Wasserbad, ggf. bei höherer Temperatur, oder in einem Lösemittel, ggf. bei höherer Temperatur, durch Abbürsten, Abschaben oder vorzugsweise durch Abspülen.

Bei Verwendung von Acrylaten als niedrigbrechendes Material muß das Mahlen des Pigmentes bei tieferen Temperaturen im Bereich von 90 bis 273 K erfolgen.

Die nachfolgenden Beispiele sollen die Erfindung erläutern.

**Beispiel 1**

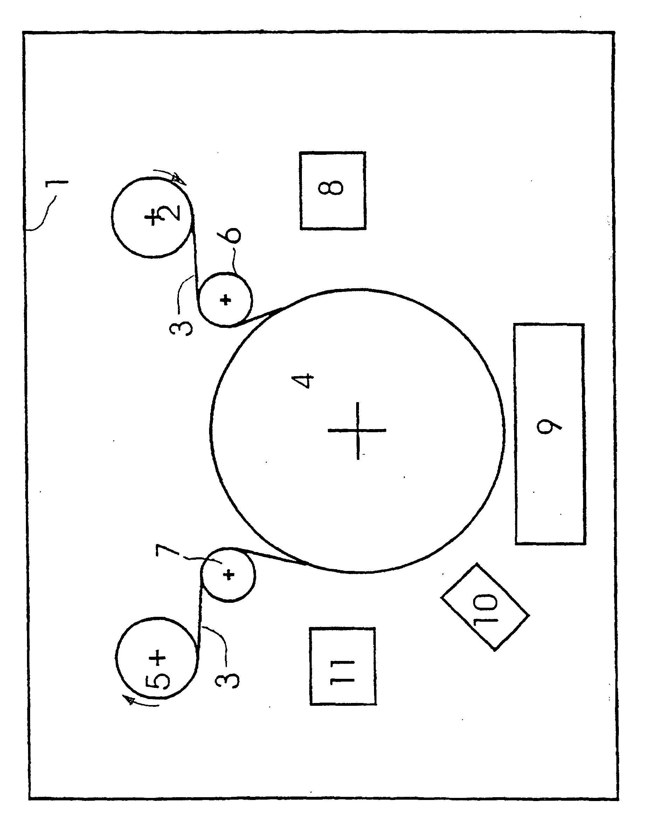

Ein Interferenzpigment, bestehend aus 7 Schichten, wird durch abwechselndes Aufdampfen von Chrom bzw. Aluminium und Acrylat auf ein Polyesterband in einer Vakuumbedampfungsanlage gemäß Figur 1 hergestellt. Das Polyesterband ist mit einer Ablöseschicht aus Stearin beschichtet. Nach dem Aufdampfen einer Chrom-, einer Acrylat- und einer Aluminiumschicht wird das Band der Anlage entnommen und in einer konventionellen Bandbeschichtungsanlage durch Rakeln die absorbierende Mittelschicht auf die Aluminiumschicht aufgebracht. Diese zentrale Schicht besteht aus einem UV-härtbarem Acrylat-Melamin-Harz, in welches Ruß dispergiert ist. Danach durchläuft das Band ein zweites Mal die Vakuumanlage, wo in gleicher Weise wie beim ersten Durchlauf die Metallschichten und die Acrylatschicht abgeschieden werden.

| Schichtaufbau des Pigmentes | | |
|---|---|---|
| Schicht- Nr. | Material | Schichtdicke nm |
| 1 | Chrom | 12 |
| 2 | Acrylat | 275 |
| 3 | Aluminium | 15 |
| 4 | Lackschicht mit Ruß | 1500 |
| 5 | Aluminium | 15 |
| 6 | Acrylat | 275 |
| 7 | Chrom | 12 |

Das Schichtsystem wird mit Aceton vom Trägerband abgelöst, mit Aceton gewaschen und getrocknet. Anschließend wird das erhaltene Pigment im Stickstoffstrom für 90 min auf 300 °C erwärmt und nachfolgend in einer Mörsermühle der Firma Netsch 30 min, gemischt mit Kohlendioxid-Trockeneis, bei -5 bis -10 °C auf eine Teilchengröße von 20 bis 40 µm zerkleinert.

**Beispiel 2**

Ein Interferenzpigment, bestehend aus 7 Schichten, wird durch abwechselndes Aufdampfen von Chrom und Acrylat auf ein Band aus Polyethylenterephthaiat (PET) in einer Vakuumbedampfungsanlage gemäß Figur 1 hergestellt. Das Band aus PET ist mit einer Ablöseschicht aus Stearin beschichtet. Nach dem Aufdampfen von zwei Chromschichten und einer Acrylatschicht wird das Band der Anlage entnommen und in einer konventionellen Bandbeschichtungsanlage durch Rakeln die absorbierende Mittelschicht auf die zweite Chromschicht aufgebracht. Diese zentrale Schicht besteht aus einem UV-härtbarem Acrylat-Melamin-Harz, in welches rotes Pigment dispergiert ist. Danach durchläuft das Band ein zweites Mal die Vakuumanlage, wo in gleicher Weise wie beim ersten Durchlauf die Metallschichten und die Acrylatschicht abgeschieden werden.

| Schichtaufbau des Pigmentes | | |
|---|---|---|
| Schicht-Nr. | Material | Schichtdicke nm |
| 1 | Chrom | 10 |
| 2 | Acrylat | 350 |
| 3 | Chrom | 11 |
| 4 | Lackschicht mit Rotpigment | 950 |
| 5 | Chrom | 10 |
| 6 | Acrylat | 350 |
| 7 | Chrom | 10 |

Das Schichtsystem wird mit Aceton vom Trägerband abgelöst, mit Aceton gewaschen und getrocknet. Anschließend wird das erhaltene Pigment im Stickstoffstrom für 90 min auf 300 °C erwärmt und nachfolgend in einer Mörsermühle der Firma Netsch, gemischt mit Kohlendioxid-Trockeneis, 30 min. bei -5 bis -10 °C auf eine Teilchengröße von 20 bis 40 µm zerkleinert.

**Beispiel 3**

Ein Interferenzpigment, bestehend aus 7 Schichten, wird durch abwechselndes Aufdampfen von Chrom bzw. Aluminium und Magnesiumfluorid auf eine Folie aus Polyethylenterephthalat hergestellt. Die zentrale Schicht (Absorptionsschicht), die aus einem schwarzen Material besteht, wird durch Aufdampfen einer Mischung aus Chrom und Siliciumdioxid hergestellt. Als Ausgangsmaterial wird ein Gemisch aus Siliciumdioxid und Chrom eingesetzt, das unter der Bezeichnung Schwarz A Pulverpatinal® von der Firma Merck KGaA vertrieben wird.
Das Aufdampfen erfolgt in einer Hochvakuum-Aufdampfanlage A 700 Q der Firma Leypold AG.

| Schichtaufbau des Pigmentes | | |
| --- | --- | --- |
| *Schicht-Nr.* | *Material* | *Schichtdicke nm* |
| 1 | Cr | 5 |
| 2 | $MgF_2$ | 453 |
| 3 | Al | 10 |
| 4 | $SiO_2/Cr$ | 90 |
| 5 | Al | 10 |
| 6 | $MgF_2$ | 453 |
| 7 | Cr | 5 |

Das Schichtsystem wird mit Aceton von der Folie abgelöst, mit Aceton gewaschen, getrocknet und in einer Mörsermühle der Firma Netsch 30 min. gemahlen. Man erhält ein Pigment mit einer mittleren Teilchengröße von 40 µm. Das Reflexionsspektrum ist in Figur 2 dargestellt.

**Patentansprüche**

1.  Multischicht-Interferenzpigment, bestehend aus einer zentralen, absorbierenden Schicht aus einem Lacksystem, welches Ruß, farbgebende Absorptionspigmente oder Mischungen daraus enthält, und alternierenden Schichten eines Materials mit niedriger Brechzahl und eines Metalls oder eines Materials mit hoher Brechzahl beiderseits der zentralen Schicht.

2.  Interferenzpigment nach Anspruch 1, **dadurch gekennzeichnet, dass** das Lacksystem ein Acrylat- Melamin- Harz ist.

3.  Interferenzpigment nach Anspruch 1 oder 2, **dadurch gekennzeichnet, daß** das Material mit niedriger Brechzahl $MgF_2$, ein Metalloxid oder ein Polymer ist.

4.  Interferenzpigment nach Anspruch 3, **dadurch gekennzeichnet, daß** das Polymer ein Acrylat ist

5.  Interferenzpigment nach Anspruch 3, **dadurch gekennzeichnet, daß** das Metalloxid $SiO_2$, $Al_2O_3$ oder eine Mischung daraus ist.

6.  Interferenzpigment nach Anspruch 1 oder 2, **dadurch gekennzeichnet, daß** das Metall Aluminium, Chrom, Nickel, eine Ni-Cr-Legierung oder Silber ist.

7.  Interferenzpigment nach Anspruch 1 oder 2, **dadurch gekennzeichnet, daß** das Material mit hoher Brechzahl $TiO_2$, $ZrO_2$, $Fe_2O_3$, $Cr_2O_3$, ZnO oder ein Gemisch aus diesen Oxiden oder ein Eisentitanat, ein Titansuboxid oder eine Mischung bzw. Mischphase dieser Verbindungen ist.

8.  Verfahren zur Herstellung des Interferenzpigmentes nach den Ansprüchen 1 bis 7, **dadurch gekennzeichnet, dass**

    -   eine Ablöseschicht aus einem in Wasser oder Lösemitteln löslichen Material auf einen Träger aufgebracht wird,

EP 0 912 642 B1

- ein Schichtsystem aus abwechselnden Schichten eines Materials mit niedriger Brechzahl und eines Metalls oder eines Materials mit hoher Brechzahl auf der Ablöseschicht abgeschieden wird, wobei als zentrale Schicht eine Schicht aus einem Lacksystem, welches Ruß, farbgebende Absorptionspigmente oder Mischungen daraus enthält, abgeschieden wird,

- das gebildete Schichtsystem vom Träger durch Auflösen der Ablöseschicht entfernt wird und das erhaltene plättchenförmige Interferenzpigment gewaschen und getrocknet wird,

- das Pigment im Stickstoffstrom einer Wärmebehandlung bei 100 bis 300 °C unterzogen und

- gemahlen und klassiert wird.

9. Verfahren nach Anspruch 8, **dadurch gekennzeichnet, dass** das Lacksystem ein Acrylat- Melamin- Harz ist.

10. Verfahren nach Anspruch 8 oder 9, **dadurch gekennzeichnet, daß** das Material mit niedriger Brechzahl $MgF_2$, ein Metalloxid oder ein Polymer ist.

11. Verfahren nach Anspruch 10, **dadurch gekennzeichnet, daß** das Polymer ein Acrylat ist.

12. Verfahren nach Anspruch 10, **dadurch gekennzeichnet, daß** das Metal-loxid $SiO_2$, $Al_2O_3$ oder eine Mischung daraus ist.

13. Verfahren nach Anspruch 8 oder 9, **dadurch gekennzeichnet, daß** das Metall Aluminium, Chrom, Nickel, eine Ni-Cr-Legierung oder Silber ist.

14. Verfahren nach Anspruch 8 oder 9, **dadurch gekennzeichnet, daß** das Material mit hoher Brechzahl $TiO_2$, $ZrO_2$, $Fe_2O_3$, $Cr_2O_3$, ZnO oder Gemische aus diesen Oxiden oder ein Eisentitanat, ein Titan-suboxid oder eine Mischung bzw. Mischphase dieser Verbindungen ist.

15. Verwendung der Pigmente nach den Ansprüchen 1 bis 7 zur Pigmentierung von Lacken, Druckfarben, Kunststoffen und Kosmetika.

16. Verwendung nach Anspruch 15, **dadurch gekennzeichnet, daß** die Pigmente als Mischungen mit konventionellen Pigmenten und mit anderen Effektpigmenten eingesetzt werden.

17. Lacke, Druckfarben, Kunststoffe und Kosmetika, welche mit einem Pigment nach den Ansprüchen 1 bis 7 pigmentiert sind.

**Claims**

1. Multilayer interference pigment consisting of a central, absorbing layer of a lacquer system which comprises carbon black, colour-imparting absorption pigments or mixtures thereof, and alternating layers of a material of low refractive index and of a metal or of a material of high refractive index either side of the central layer.

2. Interference pigment according to Claim 1, **characterised in that** the lacquer system is an acrylate-melamine resin.

3. Interference pigment according to Claim 1 or 2, **characterized in that** the material of low refractive index is $MgF_2$, a metal oxide or a polymer.

4. Interference pigment according to Claim 3, **characterized in that** the polymer is an acrylate.

5. Interference pigment according to Claim 3, **characterized in that** the metal oxide is $SiO_2$, $Al_2O_3$ or a mixture thereof.

6. Interference pigment according to Claim 1 or 2, **characterized in that** the metal is aluminium, chromium, nickel, a Ni-Cr alloy or silver.

7

7. Interference pigment according to Claim 1 or 2, **characterized in that** the material of high refractive index is $TiO_2$, $ZrO_2$, $Fe_2O_3$, $Cr_2O_3$, ZnO or a mixture of these oxides or is an iron titanate, a titanium suboxide or a mixture or mixed phase of these compounds.

8. Process for preparing the interference pigment according to Claims 1 to 7, **characterized in that**

   - a release layer comprising a water- or solvent-soluble material is applied to a substrate,

   - a layer system comprising alternating layers of a material of low refractive index and of a metal or of a material of high refractive index is deposited onto the release layer, the central layer deposited being a layer of a lacquer system which comprises carbon black, colour-imparting adsorption pigments or mixtures thereof,

   - the layer system formed is removed from the substrate by dissolving the release layer, and the resulting platelet-shaped interference pigment is washed and dried,

   - the pigment is subjected to heat treatment at from 100 to 300°C, in a stream of nitrogen, and

   - the treated pigment is milled and classified.

9. Process according to Claim 8, **characterised in that** the lacquer system is an acrylate-melamine resin.

10. Process according to Claim 8 or 9, **characterized in that** the material of low refractive index is $MgF_2$, a metal oxide or a polymer.

11. Process according to Claim 10, **characterized in that** the polymer is an acrylate.

12. Process according to Claim 10, **characterized in that** the metal oxide is $SiO_2$, $Al_2O_3$ or a mixture thereof.

13. Process according to Claim 8 or 9, **characterized in that** the metal is aluminium, chromium, nickel, a Ni-Cr alloy or silver.

14. Process according to Claim 8 or 9, **characterized in that** the material of high refractive index is $TiO_2$, $ZrO_2$, $Fe_2O_3$, $Cr_2O_3$, ZnO or a mixture of these oxides or is an iron titanate, a titanium suboxide or a mixture or mixed phase of these compounds.

15. Use of the pigments according to Claims 1 to 7 for pigmenting paints, printing inks, plastics and cosmetics.

16. Use according to Claim 15, **characterized in that** the pigments are employed as mixtures with conventional pigments and with other special-effect pigments.

17. Paints, printing inks, plastics and cosmetics which have been pigmented with a pigment according to Claims 1 to 7.


**Revendications**

1. Pigment d'interférence multicouche, constitué d'une couche centrale absorbante, elle-même constituée d'un système de vernis, qui contient du noir de carbone, des pigments d'absorption colorants ou des mélanges de ceux-ci, et des couches alternées d'un matériau ayant un faible indice de réfraction et d'un métal ou d'un matériau ayant un grand indice de réfraction, des deux côtés de la couche centrale.

2. Pigment d'interférence selon la revendication 1, **caractérisé en ce que** le système de vernis est une résine acrylate-mélamine.

3. Pigment d'interférence selon la revendication 1 ou 2, **caractérisé en ce que** le matériau ayant un faible indice de réfraction est $MgF_2$, un oxyde métallique ou un polymère.

4. Pigment d'interférence selon la revendication 3, **caractérisé en ce que** le polymère est un acrylate.

**5.** Pigment d'interférence selon la revendication 3, **caractérisé en ce que** l'oxyde métallique est $SiO_2$, $Al_2O_3$ ou un mélange de ces derniers.

**6.** Pigment d'interférence selon la revendication 1 ou 2, **caractérisé en ce que** le métal est l'aluminium, le chrome, le nickel, un alliage Ni-Cr ou l'argent.

**7.** Pigment d'interférence selon la revendication 1 ou 2, **caractérisé en ce que** le matériau ayant un grand indice de réfraction est $TiO_2$, $ZrO_2$, $Fe_2O_3$, $Cr_2O_3$, ZnO ou un mélange de ces oxydes, ou un titanate de fer, un sous-oxyde de titane ou un mélange ou une phase mixte de ces composés.

**8.** Procédé de préparation du pigment d'interférence selon les revendications 1 à 7, **caractérisé en ce que**

- une couche détachable, constituée d'un matériau soluble dans l'eau ou dans des solvants, est appliquée sur un substrat,
- un système de couches, constitué de couches alternées d'un matériau ayant un faible indice de réfraction et d'un métal ou d'un matériau ayant un grand indice de réfraction, est déposé sur la couche détachable, la couche centrale étant obtenue par dépôt d'une couche constituée d'un système de vernis qui contient du noir de carbone, des pigments absorbants colorants ou des mélanges de ces derniers,
- le système de couches formées est enlevé du substrat par dissolution de la couche détachable, et le pigment d'interférence lamellaire obtenu est lavé et séché,
- le pigment est soumis dans un courant d'azote à un traitement thermique à une température de 100 à 300°C, et
- est broyé et classé.

**9.** Procédé selon la revendication 8, **caractérisé en ce que** le système de vernis est une résine acrylate-mélamine.

**10.** Procédé selon la revendication 8 ou 9, **caractérisé en ce que** le matériau ayant un faible indice de réfraction est $MgF_2$, un oxyde métallique ou un polymère.

**11.** Procédé selon la revendication 10, **caractérisé en ce que** le polymère est un acrylate.

**12.** Procédé selon la revendication 10, **caractérisé en ce que** l'oxyde métallique est $SiO_2$, $Al_2O_3$ ou un mélange de ces derniers.

**13.** Procédé selon la revendication 8 ou 9, **caractérisé en ce que** le métal est l'aluminium, le chrome, le nickel, un alliage Ni-Cr ou l'argent.

**14.** Procédé selon la revendication 8 ou 9, **caractérisé en ce que** le matériau ayant un grand indice de réfraction est $TiO_2$, $ZrO_2$, $Fe_2O_3$, $Cr_2O_3$, ZnO ou des mélanges de ces oxydes, ou un titanate de fer, un sous-oxyde de titane ou un mélange ou une phase mixte de ces composés.

**15.** Utilisation des pigments selon les revendications 1 à 7 pour pigmenter des vernis, des encres d'imprimerie, des matières plastiques et des produits cosmétiques.

**16.** Utilisation selon la revendication 15, **caractérisée en ce que** les pigments sont utilisés sous forme de mélanges avec des pigments classiques et avec d'autres pigments à effets.

**17.** Vernis, encres d'imprimerie, matières plastiques et produits cosmétiques, qui sont pigmentés par un pigment selon les revendications 1 à 7.